# EUROPEAN PATENT SPECIFICATION

(11) **EP 1 984 170 B1**
(45) Date of publication and mention of the grant of the patent: **12.03.2014**
(21) Application number: 06851001.5
(22) Date of filing: 29.12.2006
(51) Int. Cl.: B32B 3/06

(54) **ADHESIVE BONDED ATTACHMENT ASSEMBLY FOR AN INSULATION BLANKET**
HAFTBEFESTIGUNGSANORDNUNG FÜR EINEN ISOLIERMANTEL
ENSEMBLE DE FIXATION PAR COLLAGE DESTINÉ À UN MATELAS ISOLANT

(30) Priority: 14.02.2006 US 766835 P; 18.12.2006 US 612067
(43) Date of publication of application: 29.10.2008
(73) Proprietor: PHYSICAL SYSTEMS INC., Carson City Nevada 89702 (US)
(72) Inventor: HUTTER, Charles, G., Carson City, NV 89706 (US)
(74) Representative: Ruschke, Hans Edvard
(86) International application number: PCT/US2006/062330
(87) International publication number: WO 2007/120349

(56) References cited:
- EP-A1- 0 442 810
- FR-A1- 2 697 556
- US-A- 3 238 835
- US-A- 3 285 311
- US-A- 4 454 660
- US-A- 4 566 242
- US-A- 5 426 905
- US-A- 6 003 718
- US-B1- 6 299 106

## Description

### BACKGROUND OF THE INVENTION

This invention relates generally to improvements in and to adhesive attachments of the type designed for bonded affixation to a selected substrate, such as an adhesive stud attachment of the general type disclosed in U.S. Patents 4,778,702 and 4,842,912. More specifically, this invention relates to an improved attachment assembly for use in a high temperature environment, particularly such as supporting and retaining an insulation blanket or the like on a substrate such as an aircraft engine nacelle to shield surrounding structures and components from heat generated during engine operation. The improved attachment assembly includes an insulated cap fastener for safeguarding a stud attachment against debonding in response to high temperature exposure.

Adhesive bonded attachments are generally known in the art for connecting a selected component such as a threaded stud or bolt onto a selected substrate such as a panel or other frame component in an aerospace or automotive application or the like. Such adhesive attachments typically include a base defining a bonding surface adapted to receive a selected curable bonding agent, whereupon the base is then pressed against the selected substrate for the duration of bonding agent cure time. In preferred attachment designs, a temporary attachment member or fixture is provided for temporary connection to or engagement with the substrate in a manner functioning to urge or draw the base bonding surface firmly against the substrate until the bonding agent is substantially completely cured. As a result, the adhesive bonded attachment is affixed to the substrate with a substantially optimized adhesive attachment force. Exemplary adhesive bonded stud attachments having a fastener element such as a threaded stud or bolt projecting from a radially enlarged base defining the bonding surface are disclosed in U.S. Patents 4,778,702; 4,842,912; 4,822,565; and 4,668,546. US Patent 3,238,835 directed to an "Acoustic Insulation Fastener" is the closest prior art as acknowledged in the prior art part of claim 1.

Such adhesive bonded stud attachments have been used for supporting and retaining an insulation blanket on a substrate enclosing a relatively high temperature compartment, wherein the insulation blanket is designed to heat-shield surrounding structures and components. Specifically, such insulation blankets have been mounted at the inboard side of an aircraft engine nacelle. In a typical installation, the insulation blanket comprises a suitable refractory cloth material carrying multiple grommets defining a corresponding plurality of mounting ports formed in the blanket. A plurality of adhesive bonded stud attachments are affixed onto an inboard side of the nacelle substrate at positions for stud reception into and through the grommet-defined mounting ports in the insulation blanket. Fastener nuts or the like are then secured to the ends of the studs for retaining the insulation blanket thereon at the inboard side of the nacelle substrate.

Use of adhesive bonded stud attachments for mounting an insulation blanket onto an aircraft engine nacelle or the like has, in the past, provided effective heat-shielding of adjacent structures and components to safeguard against heat damage during normal engine operation. In this regard, adhesive bonding agents have been available to withstand temperatures associated with thermal transmission along the fastener nuts and studs, and/or metal grommets on the insulation blanket, without significant risk or thermal-induced debonding of the stud attachment from the substrate. However, more recent aircraft engines have been designed to operate at significantly higher temperatures exceeding the thermal capacity of such bonding agents, whereby the adhesive-mounted stud attachment can debohd or separate from the nacelle substrate. Such failure of the stud attachment can undesirably expose the substrate and adjoining components to thermal damage.

There exists, therefore, a significant need for further improvements in and to adhesive bonded attachment assemblies particularly of the type used in a high temperature environment such as mounting an insulation blanket onto a supporting aircraft engine nacelle substrate or the like, wherein such improved attachment assembly is designed to withstand significantly higher engine operating temperatures without risk of thermal debonding from the substrate. The present invention as defined by claim 1 fulfills these needs and provides further related advantages.

### SUMMARY OF THE INVENTION

In accordance with the invention as defined by claim 1, an improved adhesive bonded attachment assembly is provided for use in a high temperature operating environment, such as supporting and retaining an insulation blanket on a substrate such as aircraft engine nacelle or the like. The attachment assembly includes a stud attachment having an enlarged base defining a mounting surface for adhesive bonded affixation to the substrate, in combination with a fastener element such as a threaded stud extending from the base for at least partial reception into a grommet-lined mounting port formed in the insulation blanket. An insulated cap fastener is secured to the fastener element to retain the insulation blanket on the nacelle substrate in a manner shielding surrounding structures and components from heat generated during engine operation. The insulated cap fastener is sized to physically and thermally overlie the associated grommet for improved heat-shielding of the grommet and the adhesive bonded stud attachment, thereby safeguarding against debonding of the attachment base in response to high temperature exposure.

In one preferred form, the improved adhesive attachment assembly comprises the stud attachment such as an elongated threaded stud projecting from an enlarged, generally disk-shaped base which may be constructed in accordance with U.S. Patents 4,778,702 and 4,842,912. The attachment base is adapted for adhesive bonded affixation onto the substrate at a selected location.

The insulation blanket, which may comprise a suitable refractory cloth or the like, has a plurality of mounting ports formed therein at selected locations by means of a plurality of typically metal grommets. A plurality of the stud attachments are mounted onto the substrate at respective positions for at least partial reception of the threaded studs thereof respectively into the grommet-lined mounting ports in the insulation blanket.

Each attachment assembly further includes the insulated cap fastener such as a threaded nut for secure thread-on assembly with the associated threaded stud. Importantly, this insulated cap fastener includes a radially enlarged insulated cap having a size sufficient to project at least slightly beyond a perimeter of the associated grommet, thereby completely overlying and insulating the underlying grommet against direct heat exposure attributable, e.g., to normal engine operation. Thus, the insulated cap fasteners associated with the respective stud attachments each overlie and insulate the associated bond-on base to safeguard against debonding from the substrate.

The insulated cap of each cap fastener has a hollow construction for receiving and supporting a suitable insulation material, such as a refractory cloth material. In one design, the insulated cap is defined by assembled inboard and outboard cap plates each constructed from a material selected for relatively low thermal conductivity, such as a low conductivity stainless steel, or a ceramic material, or the like. In one preferred form, the outboard cap plate may incorporate a drive surface such as a hex recess for receiving a suitable tool used to thread the cap nut onto the associated threaded stud. In an alternative design, the cap fastener may comprise a press-fit sleeve in lieu of a threaded nut for press-on or press-fit connection with an unthreaded stud of the stud attachment, in which case the drive surface on the outboard cap plate may be omitted. In either configuration, the inboard cap plate may include an annular array of apertures formed therein to reduce surface-to-surface physical and thermal contact with the underlying insulation blanket and associated grommet carried thereby.

Other features and advantages of the present invention will become apparent from the following more detailed description, taken in connection with the accompanying drawing which illustrate, by way of example, the principals of the present invention.

### BRIEF DESCRIPTION OF THE DRAWINGS

The accompanying drawings illustrate the invention. In such drawings:
FIGURE 1 is a fragmented perspective view showing multiple adhesive bonded attachment assemblies constructed in accordance with the invention for supporting and retaining an insulation blanket on a substrate such as an aircraft engine nacelle or the like;
FIGURE 2 is an enlarged and fragmented exploded perspective view showing an exemplary adhesive bonded attachment assembly for supporting the insulation blanket relative to the substrate;
FIGURE 3 is a further enlarged and exploded sectional view of the bonded attachment assembly including an insulated cap fastener for assembly with a bonded stud attachment;
FIGURE 4 is an enlarged and fragmented sectional view similar to FIG. 3, but showing the bonded attachment assembly components in assembled relation for supporting the insulation blanket on an engine nacelle or the like;
FIGURE 5 is an enlarged and fragmented sectional view similar to FIG. 4, but showing the adhesive bonded attachment assembly in accordance with one alternative preferred form of the invention;
FIGURE 6 is an enlarged and fragmented exploded perspective view similar to FIG. 2, but illustrating the adhesive bonded attachment assembly in accordance with a further alternative preferred form of the invention; and
FIGURE 7 is an enlarged and fragmented sectional view similar to FIGS. 4 and 5, but showing the adhesive bonded attachment assembly of FIG. 6.

### DETAILED DESCRIPTION OF THE PREFERRED EMBODIMENTS

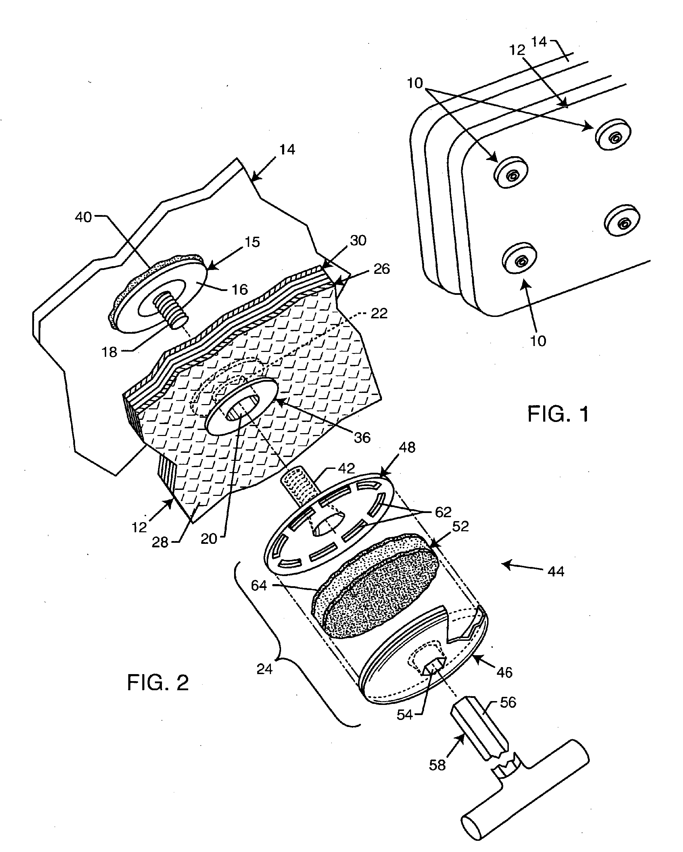

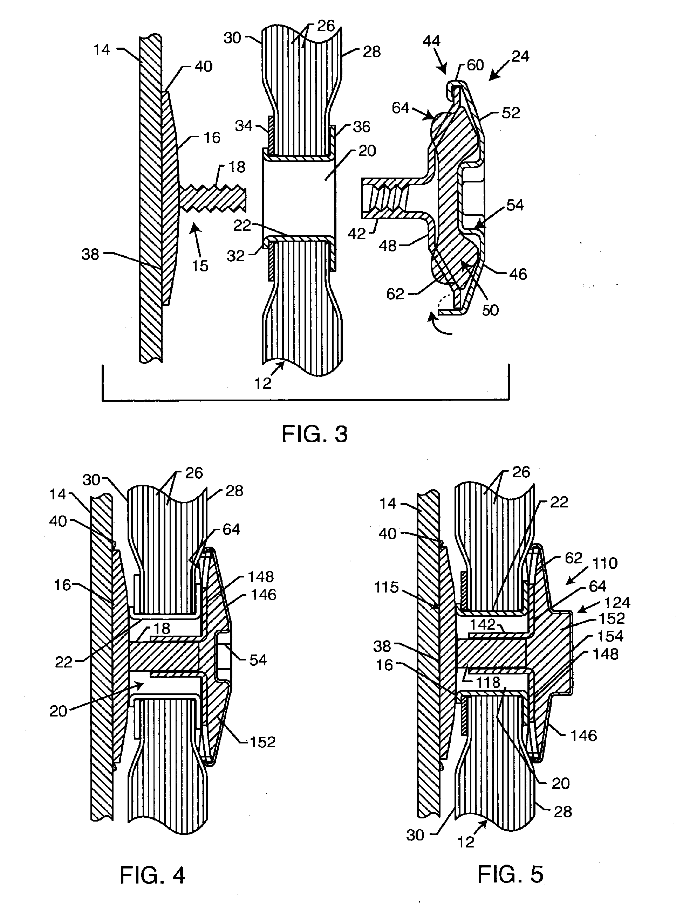

As shown in the exemplary drawings, an improved adhesive bonded attachment assembly referred to generally in FIGURE 1 by the reference numeral 10 is provided for use in a relatively high temperature operating environment, such as for use in supporting and retaining an insulation blanket 12 on a substrate 14 such as an aircraft engine nacelle or the like. Multiple attachment assemblies 10 are provided each including an attachment member such as a stud attachment 15 (FIGS. 2 and 3) having a base 16 designed for secure bond-on attachment to the substrate 14, and a fastener element 18 such as a stud to fit within as associated mounting port 20 formed in the insulation blanket 12 and lined by a cylindrical grommet 22. Each attachment assembly 10 further includes an insulated cap fastener 24 assembled with the associated fastener element 18 to support and retain the blanket on the substrate 14. The insulated cap fastener 24 is constructed to overlie the associated mounting port 20 and grommet 22 to heat-shield the adhesive mounted base 16 against undesired thermal debonding in response to normal and relatively high engine operating temperatures.

The substrate 14 comprises a wall or panel separating a relatively high temperature operating environment on one side from adjacent or adjoining equipment and components (not shown) on an opposite side. In this regard, in one typical embodiment, the substrate 14 is formed from a selected lightweight metal or a composite material defining a nacelle for an aircraft engine or the like. The insulation blanket 12 is mounted at an inboard or high temperature side of the nacelle substrate 14 to insulate and thereby safeguard adjacent structures and components against undesirable thermal damage during normal engine operation. In this regard, the insulation blanket 12 conventionally comprises refractory cloth material 26 provided typically in multiple internal layers (as shown best in FIGS. 2-4) with an inboard-side facing 28 formed from a material such as a stainless steel film or the like having a relatively low thermal conductivity. An opposite or outboard-side skin 30 on the insulated blanket 12 comprises a sheet of relatively low thermal conductivity material such as a durable silicone rubber.

The insulation blanket 12 includes the multiple mounting ports 20 formed therein at selected spaced-apart locations for pass-through reception of fasteners used to support and retain the blanket 12 at the inboard side of the nacelle substrate 14. These mounting ports 20 are conventionally lined by the associated or respective grommets 22 each having a generally cylindrical shape. As shown best in FIG. 3, each grommet 22 is normally defined by a short radially out-turned rim 32 at an outboard end thereof for locked engagement against the inner periphery of an annular washer 34 seated against the outboard-side blanket skin 30. In addition, each grommet 22 includes, at the inboard side thereof, a radially outwardly turned flange 36 having a size and shape for locked engagement against the inboard-side blanket facing 28. Such grommet 22 is typically constructed from a metal material, such as stainless steel or the like.

The improved adhesive bonded attachment assembly 10 of the present invention is designed for retaining and supporting the insulated blanket 12 at the inboard side of the nacelle substrate 14, in a manner preventing significant heat transmission through the blanket mounting ports 20, or along the metal grommets 22 lining such ports 20. In addition, the improved attachment assembly 10 prevents significant thermal transmission along the stud-type fastener element 18 to the adhesive bonded base 16. Accordingly, the improved attachment assembly effectively safeguards the adhesive bonded base 16 against thermal-caused debonding or separation from the substrate 14, while additionally improving the overall thermal protection provided to adjacent structures and components.

More particularly, each stud attachment 15 comprises the base 16 which may be constructed in accordance with U.S. Patents 4,778,702 and 4,842,912. The base 16 thus provides an underside mounting surface 38 for receiving a quantity of a selected curable bonding agent 40. The base 16 is then seated against the substrate 14 at a selected location. In the preferred form, as shown and described in U.S. Patents 4,778,702 and 4,842,912, a temporary attachment member or fixture (not shown herein) is provided for temporary connection to or engagement with the substrate 14 in a manner functioning to urge or draw the base bonding surface 38 firmly against the substrate until the bonding agent 40 is substantially completely cured. As a result, the adhesive bonded attachment is affixed to the substrate with a substantially optimized adhesive attachment force.

The fastener element 18 as shown in the exemplary drawings comprises an elongated stud having as externally threaded configuration (FIGS. 2-4). This fastener element or stud 18 has a length sufficient to project at least partially into an associated grommet-lined mounting port 20 formed in the insulation blanket 12.

The insulated cap fastener 24 generally comprises a fastener component such as an internally threaded sleeve or nut 42 for thread-on engagement with the stud 18, preferably with a lock thread design to preclude inadvertent loosening of the nut 42 on the stud 18, in combination with a radially enlarged insulated cap member 44 having a size and shape for physically and thermally overlying the associated grommet-lined mounting port 20. In the preferred embodiment as shown (FIGS. 2-4), this insulated cap fastener 24 comprises assembled inboard and outboard-side cap plates 46 and 48 each constructed from a material selected for relatively low thermal conductivity, such as a low conductivity stainless steel, or a ceramic material, or the like, and defining a hollow internal chamber 50 for receiving a quantity of insulation material 52 such as additional refractory cloth material or the like. The inboard-side cap plate 46 is shown to include a central drive surface 54 such as a hex-shaped drive socket recess or the like for receiving a matingly shaped drive tip 56 of a suitable drive tool 58 (FIG. 2) used for rotatably mounting the threaded nut 42 onto the associated threaded stud 18. In addition, the inboard-side cap plate 46 may include a peripheral rim or bead 60 (FIG. 3) turned over and capturing the periphery of the outboard-side cap plate 48 for retaining the two cap plates 46, 48 in assembled relation.

The diametric size of the cap member 44 is sufficient to overlie the associated mounting port 20 and the related grommet 22 including the inboard-side grommet flange 36. The cap member 44 projects radially outwardly at least a short distance beyond the periphery of the grommet flange 36 for physically contacting and pressing against the inboard-side facing 28 of the blanket 12 in the region surrounding or circumscribing the grommet flange 36. In the preferred form, the outboard-side cap plate 48 of the cap member 44 includes an annular array of apertures 62 formed therein at a position radially beyond the grommet flange 36 to reduce surface-to-surface physical and thermal contact between the outboard-side cap plate 48 and the underlying insulation blanket 12. Instead, the insulation material 52 carried within the cap chamber 50 includes an outboard-side skin 64 formed from a sheet of relatively low thermal conductivity and preferably elastomer material, such as a durable silicone rubber, for efficient gasket-type thermally sealed engagement with the underlying inboard-side facing 28 of the insulation blanket 12.

With this design, the insulation blanket 12 is supported on the substrate 14 quickly and easily by means of the multiple stud attachments 1 5 assembled with the corresponding insulated cap fasteners 24. Each cap fastener 24 overlies and thus heat-shields the associated mounting port 20 and grommet 22, and also overlies and heat-shields the threaded connection between the nut 42 and the stud 18. As a result, the mounting port 20 and structures associated therewith are effectively safeguarded against significant heat intrusion or soak-back. The associated adhesive bonded base 16 is thus safeguarded against exposure to extremely high temperatures associated with modern aircraft engines, thereby protecting the base 16 against thermal-induced debonding from the nacelle substrate 14. Such protection of the bond-on base 16 additionally safeguards the substrate 14 as well as other adjacent or adjoining structures and components against thermal damage.

FIG. 5 illustrates the invention in accordance with one alternative preferred form, wherein modified components of the alternative adhesive bonded attachment assembly 110 are identified by common reference numerals increased in value by 100. In this embodiment, a modified stud attachment 115 includes an unthreaded stud 118 adapted for press-on or press-fit assembly with an unthreaded mounting sleeve 142 of a modified insulated cap fastener 124.

More particularly, the stud attachment 115 (FIG. 5) again includes a base 16 defining a mounting surface 38 of relatively broad surface area for bond-on attachment to the inboard side of a nacelle substrate 14 or the like as by means of a suitable bonding agent 40. The unthreaded stud 118 protrudes from the base 16 at least a short distance into a mounting port 20 formed in an insulation blanket 12, wherein this mounting port 20 is again lined by a grommet 22.

The modified insulated cap fastener 124 includes the cap member comprising inboard and outboard-side cap plates 146 and 148 defining an internal chamber for receiving and supporting a quantity of the insulation material 152. The outboard-side cap plate 148 includes the annular array of apertures 62 disposed radially outwardly beyond the periphery of the underlying grommet structure, and the insulation material 152 includes the outboard-side elastomer skin 64 for gasket-like sealed engagement with the inboard-side facing 28 of the blanket 12. In addition, the outboard-side cap plate 148 defines the hollow sleeve 142 projecting with an internally unthreaded construction sized for press-fit or snap-type fit engagement with the unthreaded stud 118. In this design, the inboard-side cap plate 146 may omit any socket-type recess but instead includes a button-shaped member 154 for facilitated manual press-on assembly with the bonded stud attachment 115.

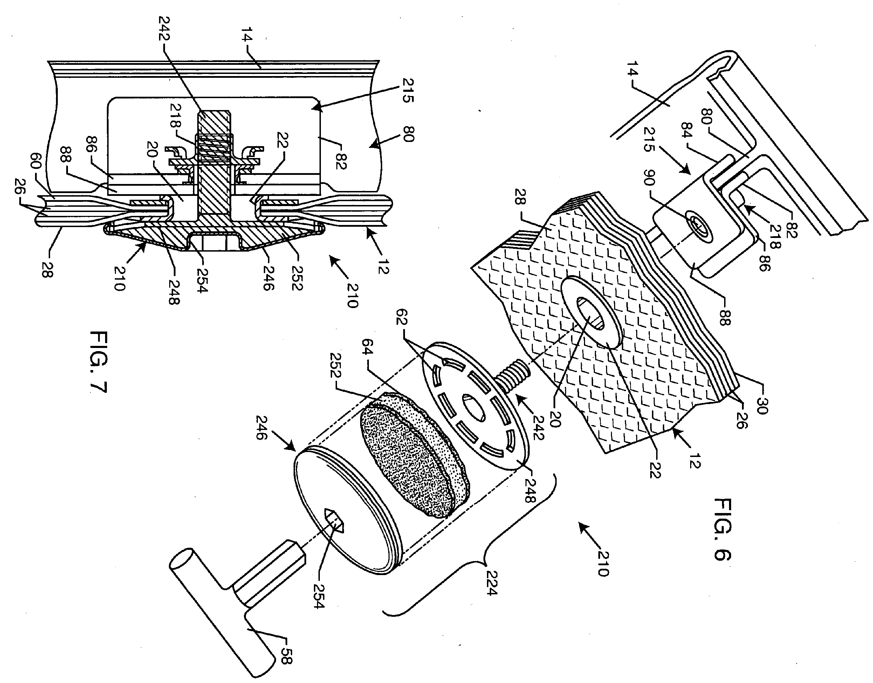

A further alternative preferred form of the invention is shown in FIGS. 6-7, wherein modified components of the alternative adhesive bonded attachment assembly 210 are identified by common reference numerals increased in value by 200. In this embodiment, the attachment assembly 210 includes a modified cap fastener 224 having a male-type fastener or fastener component 242 such as a threaded stud for thread-in engagement with a female-type attachment member 218 such as a threaded nut (FIG. 7) carried by a nutplate unit 215 mounted onto the substrate 14. In this regard, the nutplate unit 215 may comprise an adjustable mounting bracket designed for secure bond-on affixation to a standing rib 80 or the like on the substrate 14. Such nutplate units 215 are shown and described in more detail in U.S. Publication 2005/0284995.

More particularly, the nutplate unit 215 includes nested bracket components of generally L-shaped configuration (as shown in one preferred form) defining a pair of clamp jaw plates 82 and 84 forming a base for secure bonded affixation onto the standing rib 80 at opposite sides thereof, as by means of a suitable bonding agent. The nested bracket components further define a pair of slidably overlying mounting plates 86 and 88 cooperatively forming a fastener-receiving port 90, and supporting the threaded nut 218 in general alignment with said port 90.

The modified cap fastener 224 is constructed generally as previously shown and described herein, but the associated fastener 242 comprises the male-type component such as a threaded stud for reception through one of the grommet-tined mounting ports 20 in the insulation blanket 12, and for further thread-in coupling with the threaded nut 218 carried by the nutplate unit 215. This cap fastener 224 again includes inboard and outboard-side cap plates 246 and 248 defining an internal chamber for receiving and supporting a disk-shaped quantity of the insulation material 252. The outboard-side cap plate 248 includes the annular array of apertures 62 disposed radially outwardly beyond the periphery of the underlying grommet structure, and the insulation material 252 includes the outboard-side elastomer skin 64 for gasket-like sealed engagement with the inboard-side facing 28 of the blanket 12. In addition, the outboard-side cap plate 248 defines the threaded stud fastener 242. In this design, the inboard-side cap plate 246 includes the socket-type recess 254 for engaging with a suitable tool 58 (FIG. 6) for rotatably assembling the cap fastener 210 with the nutplate unit 215.

## Claims

1. An adhesive bonded attachment assembly (10, 110, 210) for supporting an insulation blanket (12) on a substrate (14), said attachment assembly comprising:
an attachment member (15, 115, 215) including a base (16) for adhesive bonded attachment to the substrate, and a fastener element (18, 118, 218); and
a cap fastener (24, 124, 224) including a radially enlarged and thermally insulated cap member (44), and a fastener component (42, 142, 242) for assembly with said fastener element of said attachment member;
at least one of said fastener element and said fastener component having a size and shape to extend at least partially into a mounting port formed in the insulation blanket, and said radially enlarged cap member having a size and shape to overlie said fastener element and further to overlie and engage the insulation blanket in a region surrounding said mounting port,
**characterized in that** said insulated cap (44) member comprises an inboard-side cap plate (46, 146, 246) and an outboard-side cap plate (48, 148, 248) cooperatively defining an internal cap chamber (50) having an insulation material (52, 152, 252) carried therein.

2. The adhesive bonded attachment assembly (10,110, 210) of claim 1 wherein said fastener component (42, 142, 242) is carried by said cap member (44).

3. The adhesive bonded attachment assembly (10,110) of claim 1 wherein said fastener element (18, 118) comprises a male fastener element, and further wherein said fastener component (42, 142) comprises a female fastener component.

4. The adhesive bonded attachment assembly (10) of claim 1 wherein said fastener element (18) comprises a threaded stud, and further wherein said fastener component (42) comprises a threaded nut.

5. The adhesive bonded attachment assembly (110) of claim 1 wherein said fastener element (118) comprises an unthreaded stud, and further wherein said fastener component (142) comprises an unthreaded sleeve for press-fit connection with said stud.

6. The adhesive bonded attachment assembly (210) of claim 1 wherein said fastener element (218) comprises a female fastener element, and further wherein said fastener component (242) comprises a male fastener component.

7. The adhesive bonded attachment assembly (10, 110, 210) of claim 1 wherein said insulation material (52, 152, 252) comprises a refractory cloth material.

8. The adhesive bonded attachment assembly (10, 110, 210) of claim 1 wherein said outboard-side cap plate (48, 148, 248) has an annular array of apertures (62) formed therein.

9. The adhesive bonded attachment assembly (10,110, 210) of claim 8 wherein said insulation material (52, 152, 252) carried within said cap chamber further comprises a sealgasket exposed through said apertures for contacting the insulation blanket (12) in a region surrounding said mounting port (20).

10. The adhesive bonded attachment assembly (10,110,210) of claim 9 wherein said mounting port (20) is lined with a grommet (22), said seal gasket (52, 152, 252) contacting said insulation blanket (12) in a region surrounding said grommet.

11. The adhesive bonded attachment assembly (10,110, 210) of claim 1 wherein said insulated cap member (44) is formed from a material having a relatively low thermal conductivity.

12. The adhesive bonded attachment assembly (10, 110, 210) of claim 1 wherein said insulated cap member (44) further defines a drive surface (54, 154, 254) formed thereon.

## Patentansprüche

1. Haftbefestigungsanordnung (10, 110, 210) zum Haltern eines Isoliermantels (12) auf einer Unterlage (14) mit:
einem Befestigungsteil (15, 115, 215) mit einem Fuß (16) zur klebenden Befestigung an der Unterlage, und einem Befestigungselement (18, 118, 218); und
einer Befestigungskappe (24, 124, 224) mit einem radial aufgeweiteten und thermisch isolierten Kappenteil (44) und einer Befestigungskomponente (42, 142, 242), die mit dem Befestigungselement des Befestigungsteils zusammensetzbar ist;
wobei mindestens das Befestigungsteil und/oder die Befestigungskomponente so groß und so gestaltet sind, dass sie mindestens teilweise in eine im Isoliermantel ausgebildete Halterungsöffnung hineinragen, und das radial aufgeweitete Kappenteil so groß und so gestaltet ist, dass es das Befestigungselement und weiterhin den Isoliermantel in einem die Halterungsöffnung umgebenden Bereich übergreift und auf ihm aufliegt, **dadurch gekennzeichnet, dass** das isolierte Kappenteil (44) ein innenbordseitiges Kappenplättchen (46, 146, 246) und ein außenbordseitiges Kappenplättchen (48, 148, 248) aufweist, die gemeinsam eine innere Kappenkammer (50) definieren, in der sich ein Isoliermaterial (52, 152, 252) befindet.

2. Haftbefestigungsanordnung (10, 110, 210) nach Anspruch 1, bei der die Befestigungskomponente (42, 142, 24) vom Kappenteil (44) getragen ist.

3. Haftbefestigungsanordnung (10, 110, 210) nach Anspruch 1, bei der das Befestigungselement (18, 118) ein Steckelement und die Befestigungskomponente (42, 142) ein Buchsenglied aufweisen.

4. Haftbefestigungsanordnung (10) nach Anspruch 1, bei der das Befestigungselement (18) einen Zapfen mit Außengewinde und die Befestigungskomponente (42) eine Mutter mit Innengewinde aufweisen.

5. Haftbefestigungsanordnung (110) nach Anspruch 1, bei der das Befestigungselement (118) einen gewindefreien Zapfen und die Befestigungskomponente (142) eine gewindefreie, auf den Zapfen aufpressbare Hülse aufweist.

6. Haftbefestigungsanordnung (210) nach Anspruch 1, bei der das Befestigungselement (218) ein Buchsenelement und die Befestigungskomponente (242) ein Steckglied aufweisen.

7. Haftbefestigungsanordnung (10, 110, 210) nach Anspruch 1, bei der das Isoliermaterial (52, 152, 252) ein feuerfestes Tuchmaterial ist.

8. Haftbefestigungsanordnung (10, 110, 210) nach Anspruch 1, bei der in dem außenbordseitigen Kappenplättchen (48, 148, 248) eine darin ausgebildete ringförmige Abfolge von Öffnungen (62) ausgebildet ist.

9. Haftbefestigungsanordnung (10, 110, 210) nach Anspruch 8, bei der das Isoliermaterial (52, 152, 252) in der Kappenkammer weiterhin einen Dichtring aufweist, der durch die Öffnungen hindurch freiliegt, um mit dem Isoliermantel (12) in einem Bereich um die Halteöffnung (20) herum zusammenzuwirken.

10. Haftbefestigungsanordnung (10, 110, 210) nach Anspruch 9, bei der die Halteöffnung (20) mit einer Durchführung (22) ausgekleidet ist, wobei der Dichtring (52, 152, 252) den Isoliermantel (12) in einem Bereich um die Durchführung herum berührt.

11. Haftbefestigungsanordnung (10, 110, 210) nach Anspruch 1, bei der das isolierte Kappenteil (44) aus einem Werkstoff verhältnismäßig geringer Wärmeleitfähigkeit ausgebildet ist.

12. Haftbefestigungsanordnung (10, 110, 210) nach Anspruch 1, bei der weiterhin der isolierte Kappenteil (44) eine darin ausgebildete Angriffsfläche (54, 154, 254) definiert.

## Revendications

1. Ensemble d'attache adhésive (10, 110, 210) pour supporter un matelas d'isolation (12) sur un substrat (14), ledit ensemble de fixation comprenant :
un organe d'attache (15, 115, 215) incluant une base (16) pour une attache adhésive au substrat, et un élément de fixation (18, 118, 218) ; et
une fixation de capuchon (24, 124, 224) incluant un organe de capuchon thermiquement isolé et radialement élargi (44), et un composant de fixation (42, 142, 242) pour un assemblage avec ledit élément de fixation dudit organe d'attache ;
au moins un parmi ledit élément de fixation et ledit composant de fixation ayant une taille et une forme pour s'étendre au moins partiellement dans un orifice de montage formé dans le matelas d'isolation, et ledit organe de capuchon radialement élargi ayant une taille et une forme pour recouvrir ledit élément de fixation et également pour recouvrir et engager le matelas d'isolation dans une région entourant ledit orifice de montage, **caractérisé en ce que** ledit organe de capuchon isolé (44) comprend une plaque de capuchon intérieure (46, 146, 246) et une plaque de capuchon extérieure (48, 148, 248) définissant de manière coopérative une chambre de capuchon interne (50) ayant un matériau d'isolation (52, 152, 252) porté dans celle-ci.

2. Ensemble d'attache adhésive (10, 110, 210) selon la revendication 1, dans lequel ledit composant de fixation (42, 142, 242) est porté par ledit organe de capuchon (44).

3. Ensemble d'attache adhésive (10, 110) selon la revendication 1, dans lequel ledit élément de fixation (18, 118) comprend un élément de fixation mâle, et en outre dans lequel ledit composant de fixation (42, 142) comprend un composant de fixation femelle.

4. Ensemble d'attache adhésive (10) selon la revendication 1, dans lequel ledit élément de fixation (18) comprend un goujon fileté, et en outre dans lequel ledit composant de fixation (42) comprend un écrou fileté.

5. Ensemble d'attache adhésive (110) selon la revendication 1, dans lequel ledit élément de fixation (118) comprend un goujon non fileté, et en outre dans lequel ledit composant de fixation (142) comprend un manchon non fileté pour une liaison par ajustement serré avec ledit goujon.

6. Ensemble d'attache adhésive (210) selon la revendication 1, dans lequel ledit élément de fixation (218) comprend un élément de fixation femelle, et en outre dans lequel ledit composant de fixation (242) comprend un composant de fixation mâle.

7. Ensemble d'attache adhésive (10, 110, 210) selon la revendication 1, dans lequel ledit matériau d'isolation (52, 152, 252) comprend une matière de tissu réfractaire.

8. Ensemble d'attache adhésive (10, 110, 210) selon la revendication 1, dans lequel ladite plaque de capuchon extérieure (48, 148, 248) a un réseau annulaire d'ouvertures (62) formées dans celle-ci.

9. Ensemble d'attache adhésive (10, 110, 210) selon la revendication 8, dans lequel ledit matériau d'isolation (52, 152, 252) porté à l'intérieur de ladite chambre de capuchon comprend en outre une garniture d'étanchéité exposée à travers lesdites ouvertures pour venir en contact avec le matelas d'isolation (12) dans une région entourant ledit orifice de montage (20).

10. Ensemble d'attache adhésive (10, 110, 210) selon la revendication 9, dans lequel ledit orifice de montage (20) est revêtu d'un oeillet (22), ladite garniture d'étanchéité (52, 152, 252) étant en contact avec ledit matelas d'isolation (12) dans une région entourant ledit oeillet.

11. Ensemble d'attache adhésive (10, 110, 210) selon la revendication 1, dans lequel ledit organe de capuchon isolé (44) est formé à partir d'un matériau ayant une conductivité thermique relativement faible.

12. Ensemble d'attache adhésive (10, 110, 210) selon la revendication 1, dans lequel ledit organe de capuchon isolé (44) définit en outre une surface d'entraînement (54, 154, 254) formée sur celui-ci.
